# EUROPÄISCHE PATENTANMELDUNG

(11) **EP 2 182 182 A2**
(43) Veröffentlichungstag der Anmeldung: **05.05.2010**
(21) Anmeldenummer: 10001169.1
(22) Anmeldetag: 19.09.2007
(51) Int. Cl.: F01L 1/46, F01L 3/20, F01L 3/24, G01B 7/00, G01B 7/04, G01D 5/14

(54) **Verfahren und Vorrichtung zur Ventilhuberfassung**

(30) Priorität: 02.11.2006 DE 102006051603
(62) Teilanmeldung aus: 07018346.2
(71) Anmelder: Dr. Ing. h.c. F. Porsche AG, 70435 Stuttgart (DE)
(72) Erfinder: Bazlen, Joachim, 74321 Bietigheim-Bissingen (DE); Mikus, Roman, 74321 Bietigheim-Bissingen (DE)

(57) **Zusammenfassung**

Die vorliegende Erfindung schafft ein Verfahren und eine Vorrichtung zur Ventilhuberfassung. Die Vorrichtung dient zur Ventilhuberfassung eines Ventils (VA) mit einer ferromagnetischen periodisch modulierten Struktur (N,P) auf dem Ventilschaft (VS), wobei eine Sensoreinrichtung (MS, SA) vorgesehen ist, durch die unter dem Einfluss der ferromagnetischen periodisch modulierten Struktur (N,P) auf dem Ventilschaft (VS) ein elektrisches Ausgangssignal (COS, SIN) entsprechend dem Ventilhub des Ventils (VA) erzeugbar ist.

## Beschreibung

### STAND DER TECHNIK

Die vorliegende Erfindung betrifft ein Verfahren und eine Vorrichtung zur Ventilhuberfassung.

Obwohl auf beliebige Ventile anwendbar, werden die vorliegende Erfindung und die ihr zugrunde liegende Problematik anhand von Ventilen einer Brennkraftmaschine erläutert.

In jüngerer Zeit erlangt die Erfassung eines Ventilhubes von Ventilen einer Brennkraftmaschine insbesondere zur Untersuchung des Triebverhaltens bei Drehzahl- und Lastwechseln mehr und mehr an Bedeutung. Aber auch für künftige Ventilgenerationen, zum Beispiel elektrisch gesteuerte Ventile, ist die genaue Erfassung des Ventilhubs von großer Wichtigkeit.

In diesem Zusammenhang wurde vorgeschlagen, einen Ventil-Schaft konisch anzuschrägen und einen Ventilhub mit Hilfe eines Wirbelstromsensors zu erfassen, der auf eine Abstandsänderung zwischen Ventilschaft und Sensor anspringt. Diese bekannte Messtechnik hat den Nachteil, dass sie aufgrund von einer Achsenverkippung des Ventils in einer Ventilführung fehlerbehaftete Werte liefert. Um derartige Fehler zu vermeiden, müssen drei Wirbelstromsensoren in einem Winkelabstand von 180° in einer VentilFührung angebracht werden. Eine derartige Vorgehensweise ist jedoch aufwändig und kostspielig.

Weiterhin wurde vorgeschlagen, den Ventilhub direkt durch einen Abstandssensor zu erfassen. Bei dieser Messtechnik kann aufgrund geringer Messbereiche nur ein Teilhub erfasst werden. Zudem ist ein Einsatz auf der heißen Auslassseite, wo Temperaturen von typischerweise 800° C auftreten, nicht möglich.

Aus der DE 102 14 685 A1 ist eine Vorrichtung zur Erfassung des Weges von Ventilhubbewegungen für Ventile von Verbrennungsmotoren mit einem dem Ventil zugeordneten Magnetsystem bekannt, das eine gegenüber dem Ventil ortsfeste, magnetfelderzeugende Einrichtung aufweist, wobei die magnetfeiderzeugende Einrichtung in einem das Ventil oder seinen ferromagnetischen Ventilschaft koaxial umgebenden Sensorgehäuse vorgesehen ist und auf dem ferromagnetischen Ventilschaft mehrere mit der magnetfelderzeugenden Einrichtung zusammenwirkende und Sensorsignale initiierende Elemente wie mit Abstand nebeneinander angeordnete Erhebung oder Vertiefung vorgesehen sind, wobei die Sensorsignale bei einer Bewegung des Ventils erzeugt werden.

Daher ist es Aufgabe der vorliegenden Erfindung, ein verbessertes Verfahren und eine verbesserte Vorrichtung zur Ventilhub-Erfassung zu schaffen, welche weniger fehlerbehaftet und weniger temperaturanfällig sind.

### VORTEILE DER ERFINDUNG

Das erfindungsgemäße Verfahren zur Ventilhuberfassung gemäß Anspruch 1 bzw. die entsprechende Vorrichtung nach Anspruch 8 weisen den Vorteil auf, dass sie eine Messung der befeuerten Ventilhubverläufe über den gesamten Hubbereich bei kleinsten Einbauräumen an Ein- und Auslassventil ermöglichen.

Die der vorliegenden Erfindung zugrunde liegende Idee besteht darin, dass zu vermessende Ventil an seinem Ventil-Schaft mit einer periodisch modulierten Zahnstruktur zu versehen und eine Sensoreinrichtung bereit zu stellen, die unter dem Einfluss der ferromagnetischen periodisch modulierten Zahnstruktur ein elektrisches Ausgangssignal entsprechend dem Ventilhub des Ventils erzeugt. Vorzugsweise ist die Sensoreinrichtung eine magnetoresistive Sensoreinrichtung und wird in eine Ventilführung eingebaut, welche vorzugsweise wiederum in einen Zylinderkopf der Brennmaschine eingebaut, vorzugsweise eingepresst, wird.

Während der Ventilbewegung läuft die Zahnstruktur an der Sensoreinrichtung vorbei und moduliert das vom Sensor erzeugte elektrische Signal. Dieses modulierte Signal kann direkt als Ventilhub-Verlauf ausgewertet werden, oder es können daraus mittels einem Interpolator erzeugte Rechteck-Impulszüge erzeugt werden, welche zur Auswertung herangezogen werden.

In den Unteransprüchen finden sich vorteilhafte Weiterbildungen und Verbesserungen des jeweiligen Gegenstandes der Erfindung.

Gemäß einer bevorzugten Weiterbildung ist die Sensoreinrichtung eine magnetoresistive Sensoreinrichtung und liefert ein periodisch moduliertes elektrisches Spannungssignal als elektrisches Ausgangssignal mit einer ersten Periode.

Gemäß einer weiteren bevorzugten Weiterbildung wird das Spannungssignal sinusförmig moduliert.

Gemäß einer weiteren bevorzugten Weiterbildung liefert die Sensoreinrichtung ein entsprechendes cosinusförmig moduliertes Spannungssignal als weiteres elektrisches Ausgangssignal.

Gemäß einer weiteren bevorzugten Weiterbildung werden das sinusförmig und das entsprechende cosinusförmig modulierte Spannungssignal einer Sinus-/Cosinus-Interpolation zum Erzeugen von einem ersten und zweiten Rechtecksignal mit einer zweiten Periode unterworfen, wobei die zweite Periode kleiner als die erste Periode ist.

Gemäß einer weiteren bevorzugten Weiterbildung ist die zweite Periode um mindestens einen Faktor 10 kleiner als die erste Periode.

Gemäß einer weiteren bevorzugten Weiterbildung wird die Sensoreinrichtung in eine Wand einer hülsenförmigen Ventilführungseinrichtung integriert und anschließend zusammen mit der Ventilführungseinrichtung in einen Zylinderkopf einer Brennkraftmaschine eingeführt.

### ZEICHNUNGEN

Ein Ausführungsbeispiel der Erfindung ist in den Zeichnungen dargestellt und in der nachfolgenden Beschreibung näher erläutert.

Es zeigen:
- Fig. 1: eine Ventilhub-Erfassungsvorrichtung gemäß einer ersten Ausführungsform der vorliegenden Erfindung; und
- Fig. 2: eine Ventilhub-Erfassungsvorrichtung gemäß einer zweiten Ausführungsform der vorliegenden Erfindung.

### BESCHREIBUNG DER AUSFÜHRUNGSBEISPIELE

In den Figuren bezeichnen dieselben Bezugszeichen gleiche oder funktionsgleiche Elemente.

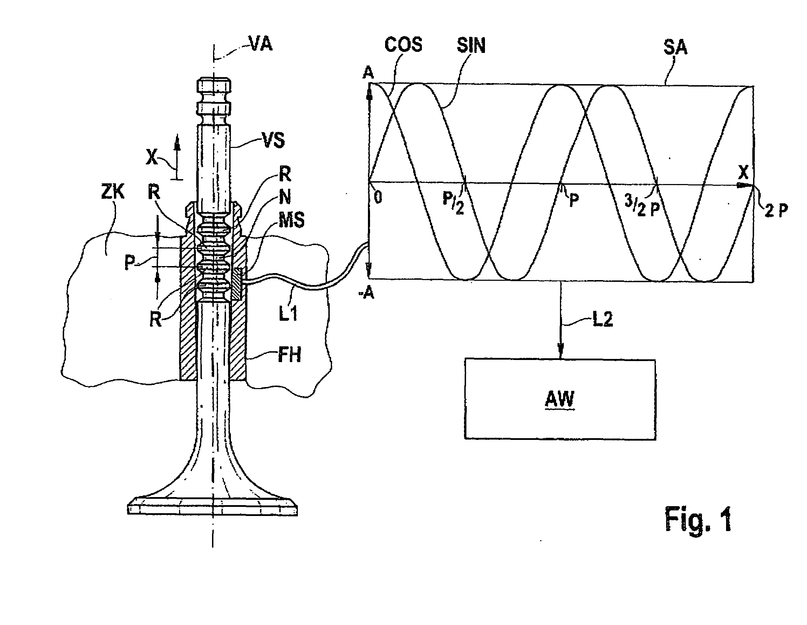

Fig. 1 zeigt eine Ventilhub-Erfassungsvorrichtung gemäß einer ersten Ausführungsform der vorliegenden Erfindung.

In Figur 1 bezeichnet Bezugszeichen VA ein Ventil einer nicht näher dargestellten Brennkraftmaschine. Das Ventil ist durch eine hülsenförmige Ventilführungseinrichtung FH geführt, welche an einen Zylinderkopf ZK der Brennkraftmaschine eingepresst ist.

Im Ventilschaft VS vorgesehen ist eine periodisch modulierte ferromagnetische Zahnstruktur mit Zähnen R und dazwischenliegenden Vertiefungen N, welche eine Periode P aufweist. Bei diesem Beispiel beträgt die Periode P 0,5 mm bzw. 500 µm Die Zahnstruktur R, N kann bei diesem Beispiel durch Einfräsen vorgesehen werden, da der Ventilschaft VA an sich bereits ferromagnetisch ist, das heißt einen bestimmten Eisenanteil enthält. Bei nicht-magnetischen Ventil-Schäften könnte die Zahnstruktur dadurch vorgesehen werden, dass Zähne aus ferromagnetischem Material auf die Oberseite des Ventilschaftes VS auflegiert werden.

In der Wand der Ventilführungseinrichtung FH eingebracht ist eine magnetoresistive Sensoreinrichtung MS, welche durch eine durch den Zylinderkopf verlaufende Leitung L1 mit einer schematisch dargestellten Signalbildungseinheit SA verbunden ist. Zum Einbau wird die magnetoresistive Sensoreinrichtung MS zunächst in der vom Zylinderkopf ZK getrennten hülsenförmigen Ventilführungseinrichtung FH eingebaut und diese dann zusammen im Zylinderkopf ZK verpresst. Ebenfalls möglich wäre es, die Leitung L1 durch die Ventilführungseinrichtung FH laufen zu lassen bzw. an der Grenzfläche zwischen Zylinderkopf ZK und Ventilführungseinrichtung FH laufen zu lassen.

Bei der Ventilhubbewegung, welche beim vorliegenden Beispiel in x-Richtung erfolgt, ist das an der magnetoresistiven Sensoreinrichtung MS erfasste Magnetfeld durch die Ventilbewegung periodisch moduliert. Dabei hat sich herausgestellt, dass bei einer Zahnstruktur im Wesentlichen sinusförmige Verläufe erhältlich sind. Aufgrund von Feldverzerrungen und Artefakten der Sensoreinrichtung MS ist dabei die geometrische Struktur der Zahnstruktur in der Regel nicht identisch mit der erhaltenen periodischen Signalstruktur der Signalbildungseinrichtung SA.

Das physikalische Prinzip der magnetoresistiven Sensoreinrichtung basiert darauf, dass sich die elektrische Leitfähigkeit einer anisotropen ferromagnetischen Schicht unter dem Einfluss eines äußeren magnetischen Feldes, welches in der Ebene der Schicht verläuft, verändert. Dabei ist die Widerstandsänderung der ferromagnetischen Schicht von der Richtung und der Stärke des äußeren Magnetfelds abhängig.

Der kleinste Widerstandswert stellt sich ein, wenn der Winkel zwischen dem äußeren Magnetfeld und der Stromflussrichtung in der Schicht 90° beträgt, und die Magnetisierung der Schicht ihren Sättigungswert erreicht hat. Der größte Widerstandswert ergibt sich, wenn das applizierte Feld parallel zur Stromrichtung in der Schicht verläuft.

Die von der Signalbildungseinrichtung SA erzeugten Spannungsverläufe, welche im Schaltungsblock der Signalbildungseinrichtung SA abschnittsweise dargestellt sind, tragen die Bezeichnungen SIN für ein sinusförmiges Spannungsverläufe und COS für ein cosinusförmiges Spannungssignal. Beide Spannungsverläufe sind um 180° phasenverschoben und beruhen auf demselben physikalischen Effekt. Das Bezugszeichen A bezeichnet die Amplitude des sinusförmigen bzw, cosinusförmigen Spannungssignals. Im vorliegenden Fall erreicht der cosinusförmige Spannungsverlauf ein Minimum, wenn sich ein Zahn R unmittelbar vor dem Erfassungsbereich der magneto-resistiven Sensoreinrichtung MS befindet. Der entsprechende sinusförmige Spannungsverlauf SIN wird zeitsynchron von der Sensoreinrichtung MS durch eine einfache Phasenverschiebung erzeugt.

Beim vorliegenden Beispiel werden die derart erzeugten Spannungsverläufe SIN, COS über eine zweite Leitung L2 einer Auswerteeinrichtung AW zugeführt. Die Auswerteeinrichtung AW legt beispielsweise einen Nullpunkt fest und berechnet einen absoluten Ventilhub aus dem Verhältnis der SIN/COS-Signale. Durch mathematische Zusammenhänge lässt sich so die Auflösung um ein Vielfaches im Vergleich zur Zahnperiode P erhöhen. Das so erzeugte Signal des absoluten Ventilhubes lässt sich dann beliebigen anderen Einrichtungen der Brennkraftmaschine bzw. externen Einrichtungen zur Verfügung stellen, um die Größe des Ventilhubes mit anderen physikalischen Größen der Brennkraftmaschine zu korrelieren.

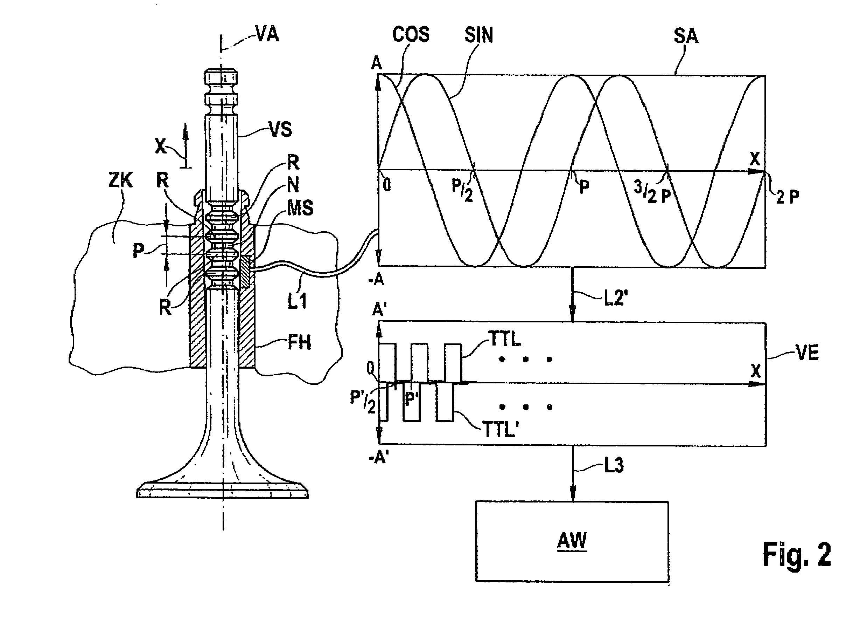

Fig. 2 zeigt eine Ventilhub-Erfassungsvorrichtung gemäß einer zweiten Ausführungsform der vorliegenden Erfindung.

Bei der in Figur 2 gezeigten zweiten Ausführungsform wird das Signal der Signalbildungseinrichtung SA nicht direkt der Auswerteeinheit AW zugeführt, sondern zunächst durch eine Leitung L2' einer Signalverarbeitungseinrichtung VE in Form eines digitalen Sinus-/Cosinus-Interpolators zugefügt. Der Sinus-/Cosinus-Interpolator VE erzeugt aus dem sinusförmigen und cosinusförmigen Spannungsverlauf SIN, COS Rechtecksignale TTL und TTL', welche eine wesentlich geringere Periode P' aufweisen als die Spannungssignale der Signalverarbeitungseinrichtung SA. Im vorliegenden Fall beträgt die Periode P' 10 µm verglichen mit der Periode P welche, wie oben gesagt, 500 µm beträgt. Aufgrund der so durchgeführten Signalverarbeitung lässt sich eine wesentlich höhere Auflösung erzielen als bei unmittelbarer Verwendung der sinusförmigen bzw. cosinusförmigen Spannungssignale SIN, COS. Ebenfalls durchgeführt wird eine Anpassung der Amplitude A auf eine Amplitude A' mit TTL-Normierung. Das Rechtecksignal TTL entspricht im Übrigen dem sinusförmigen Spannungssignal SIN wohingegen das Rechtecksignal TTL' dem cosinusförmigen Spannungssignal COS entspricht.

Durch eine dritte Leitung L3 werden die Rechtecksignale TTL, TTL' der Auswerteeinrichtung AW zugeführt, wo die bereits angesprochene Weiterverarbeitung der Signale stattfindet. In diesem Fall kann jedoch auf eine mathematische Berechnung zur Vervielfachung der Auflösung verzichtet werden.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Obwohl bei der obigen zweiten Ausführungsform bei der digitalen Signalverarbeitung in die Rechtecksignale TTL, TTL' eine Reduzierung der Periode um einen Faktor 50 erzielt wurde, ist die Erfindung darauf nicht beschränkt. Ein Sinus-/Cosinus-Interpolator ist im Allgemeinen programmierbar und lässt verschiedene Skalierungen der zugeführten Sinus-/ Cosinus-Signale zu. Welcher konkrete Skalierungsfaktor beim Anwendungsfall gewählt wird, hängt zum Beispiel von den geometrischen Abmessung der Struktur ab. Zweckmäßigerweise wird man dabei versuchen, dass eine ganzzahlige Anzahl von Rechteckzähnen in eine vollständige Periode fällt.

## Patentansprüche

1. Verfahren zur Ventilhuberfassung eines Ventils (VA) einer Brennkraftmaschine mit einem nicht-magnetischen Ventilschaft, mit einer ferromagnetischen periodisch modulierten Zahnstruktur (N,P) auf dem Ventilschaft (VS) derart, dass Zähne aus ferromagnetischem Material auf die Oberseite des Ventilschaftes (VS) auflegiert werden, wobei eine Sensoreinrichtung (MS, SA) unter dem Einfluss der ferromagnetischen periodisch modulierten Zahnstruktur (N,P) auf dem Ventilschaft (VS) ein elektrisches Ausgangssignal (COS, SIN) entsprechend dem Ventilhub des Ventils (VA) erzeugt.

2. Verfahren nach Anspruch 1, **dadurch gekennzeichnet, dass** die Sensoreinrichtung (MS, SA) eine magnetoresistive Sensoreinrichtung ist und ein periodisch moduliertes Spannungssignal als elektrisches Ausgangssignal (COS, SIN) mit einer ersten Periode (P) liefert.

3. Verfahren nach Anspruch 2, **dadurch gekennzeichnet, dass** das Spannungssignal (SIN) sinusförmig moduliert wird.

4. Verfahren nach Anspruch 3, **dadurch gekennzeichnet, dass** die Sensoreinrichtung (MS, SA) ein entsprechendes cosinusförmig moduliertes Spannungssignal (COS) als weiteres elektrisches Ausgangssignal (COS, SIN) liefert.

5. Verfahren nach Anspruch 4, **dadurch gekennzeichnet, dass** das sinusförmig und das entsprechende cosinusförmig modulierte Spannungssignal (SIN, COS) einer Sinus-/Cosinus-Interpolation zum Erzeugen von einem ersten und zweiten Rechtecksignal (TTL, TTL') mit einer zweiten Periode (P') unterworfen werden, wobei die zweite Periode (P') kleiner als die erste Periode (P) ist.

6. Verfahren nach Anspruch 4, **dadurch gekennzeichnet, dass** die zweite Periode (P') um mindestens einen Faktor 10 kleiner als die erste Periode (P) ist.

7. Verfahren nach Anspruch 1, **dadurch gekennzeichnet, dass** die Sensoreinrichtung (MS, SA) in eine Wand einer hülsenförmigen Ventilführungseinrichtung (FH) integriert wird und anschließend zusammen mit der Ventilführungseinrichtung (FH) in einen Zylinderkopf (ZK) einer Brennkraftmaschine eingeführt wird.

8. Vorrichtung zur Ventilhuberfassung eines Ventils (VA) einer Brennkraftmaschine mit einem nicht-magnetischen Ventilschaft, mit einer ferromagnetischen periodisch modulierten Zahnstruktur (N,P) auf dem Ventilschaft (VS) derart, dass Zähne aus ferromagnetischem Material auf die Oberseite des Ventilschaftes (VS) auflegiert werden, wobei eine Sensoreinrichtung (MS, SA) vorgesehen ist, durch die unter dem Einfluss der ferromagnetischen periodisch modulierten Zahnstruktur (N,P) auf dem Ventilschaft (VS) ein elektrisches Ausgangssignal (COS, SIN) entsprechend dem Ventilhub des Ventils (VA) erzeugbar ist.

9. Vorrichtung nach Anspruch 8, **dadurch gekennzeichnet, dass** die Sensoreinrichtung (MS, SA) eine magnetoresistive Sensoreinrichtung ist, durch welche ein periodisch moduliertes Spannungssignal als elektrisches Ausgangssignal (COS, SIN) mit einer ersten Periode (P) erzeugbar ist.

10. Vorrichtung nach Anspruch 9, **dadurch gekennzeichnet, dass** das Spannungssignal (SIN) sinusförmig moduliert ist.

11. Vorrichtung nach Anspruch 10, **dadurch gekennzeichnet, dass** durch die Sensoreinrichtung (MS, SA) ein entsprechendes cosinusförmig moduliertes Spannungssignal (COS) als weiteres elektrisches Ausgangssignal (COS, SIN) erzeugbar ist.

12. Vorrichtung nach Anspruch 11, **dadurch gekennzeichnet, dass** eine Signalverarbeitungseinrichtung (VE) vorgesehen ist, durch die das sinusförmig und das entsprechende cosinusförmig modulierte Spannungssignal (SIN, COS) einer Sinus-/ Cosinus-Interpolation zum Erzeugen von einem ersten und zweiten Rechtecksignal (TTL, TTL') mit einer zweiten Periode (P') unterwerfbar sind, wobei die zweite Periode (P') kleiner als die erste Periode (P) ist.

13. Vorrichtung nach Anspruch 12, **dadurch gekennzeichnet, dass** die zweite Periode (P') um mindestens einen Faktor 10 kleiner als die erste Periode (P) ist.

14. Vorrichtung nach Anspruch 8, **dadurch gekennzeichnet, dass** die Sensoreinrichtung (MS, SA) in eine Wand einer hülsenförmigen Ventilführungseinrichtung (FH) integriert ist und zusammen mit der Ventilführungseinrichtung (FH) in einen Zylinderkopf (ZK) einer Brennkraftmaschine eingeführt ist.
